(19) **Europäisches Patentamt / European Patent Office / Office européen des brevets**

(11) **EP 3 605 672 A1**

(12) # EUROPEAN PATENT APPLICATION
published in accordance with Art. 153(4) EPC

(43) Date of publication:
**05.02.2020 Bulletin 2020/06**

(21) Application number: **18776257.0**

(22) Date of filing: **26.03.2018**

(51) Int Cl.:
**H01M 4/525** (2010.01)   **C01G 53/00** (2006.01)
**H01M 4/36** (2006.01)   **H01M 4/505** (2010.01)

(86) International application number:
**PCT/JP2018/012102**

(87) International publication number:
**WO 2018/181158 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2017 JP 2017072869**

(71) Applicants:
• **Sumitomo Chemical Company, Limited**
  **Tokyo 104-8260 (JP)**
• **Tanaka Chemical Corporation**
  **Fukui-shi**
  **Fukui 910-3131 (JP)**

(72) Inventors:
• **KURITA Hiroyuki**
  **Osaka-shi**
  **Osaka 554-8558 (JP)**
• **NAKAO Kimiyasu**
  **Fukui-shi**
  **Fukui 910-3131 (JP)**
• **MATSUMOTO Kayo**
  **Fukui-shi**
  **Fukui 910-3131 (JP)**

(74) Representative: **Vossius & Partner**
**Patentanwälte Rechtsanwälte mbB**
**Siebertstrasse 3**
**81675 München (DE)**

(54) **POSITIVE ELECTRODE ACTIVE MATERIAL FOR LITHIUM SECONDARY BATTERIES, POSITIVE ELECTRODE FOR LITHIUM SECONDARY BATTERIES, AND LITHIUM SECONDARY BATTERY**

(57)     A positive electrode active material for a lithium secondary battery contains an active material powder including secondary particles that are aggregates of primary particles into and from which lithium ions are doped and dedoped, includes the secondary particles having voids therein, and satisfies the following Requirements (1) and (2) in pore distribution of the positive electrode active material for a lithium secondary battery measured by a mercury porosimetry method.

(1) A positive electrode active material for a lithium secondary battery has a pore peak in a range in which a pore radius is 10 nm or more and 200 nm or less.

(2) A positive electrode active material for a lithium secondary battery has three or more inflection points of a cumulative pore volume in a range in which the pore radius is 10 nm or more and 3000 nm or less.

EP 3 605 672 A1

*FIG. 2*

MATERIAL OF PRESENT APPLICATION: THREE PEAKS
(①: DERIVED FROM MICROVOIDS INSIDE SECONDARY PARTICLE,
②③: DERIVED FROM GAP BETWEEN SECONDARY PARTICLES)

**Description**

TECHNICAL FIELD

The present invention relates to a positive electrode active material for a lithium secondary battery, a positive electrode for a lithium secondary battery, and a lithium secondary battery.
Priority is claimed on Japanese Patent Application No. 2017-072869, filed on March 31, 2017, the content of which is incorporated herein by reference.

BACKGROUND ART

A lithium composite oxide has been used as a positive electrode active material for a nonaqueous electrolyte secondary battery (hereinafter, sometimes referred to as "positive electrode active material"). Lithium secondary batteries have been already in practical use not only for small power sources in mobile phone applications, notebook personal computer applications, and the like but also for medium-sized and large-sized power sources in automotive applications, power storage applications, and the like.
In order to improve the performance of a lithium secondary battery such as volume capacity density, for example, PTL 1 discloses a positive electrode active material powder in which two kinds of particle powder having different crushing strength to each other are mixed.

Citation List

Patent Literature

[PTL 1] PCT International Publication No. WO2005/020354

DISCLOSURE OF INVENTION

Technical Problem

As the application area of lithium secondary batteries expands, the positive electrode active material used in the lithium secondary batteries requires a further improvement in volume capacity density. Here, "volume capacity density" means cell capacity per unit volume (amount of electric power that can be stored). The larger the value of volume capacity density, the more suitable for a small cell.
However, the positive electrode active material for a lithium secondary battery as described in PTL I has room for improvement from the viewpoint of improving the volume capacity density.
The present invention has been made in view of the above circumstances, and an object thereof is to provide a positive electrode active material for a lithium secondary battery having a high volume capacity density, a positive electrode for a lithium secondary battery using the positive electrode active material for a lithium secondary battery, and a lithium secondary battery having the positive electrode for a lithium secondary battery.

Solution to Problem

That is, the present invention includes the inventions of the following [1] to [8].

[1] A positive electrode active material for a lithium secondary battery includes an active material powder including secondary particles that are aggregates of of primary particles into and from which lithium ions are doped and dedoped, includes the secondary particles having voids therein, and satisfies the following Requirements (1) and (2) in pore distribution of the positive electrode active material for a lithium secondary battery measured by a mercury porosimetry method.

(1) A positive electrode active material for a lithium secondary battery has a pore peak in a range in which a pore radius is 10 nm or more and 200 nm or less.
(2) A positive electrode active material for a lithium secondary battery has three or more inflection points of a cumulative pore volume in a range in which the pore radius is 10 nm or more and 3000 nm or less.

[2] The positive electrode active material for a lithium secondary battery according to [1], in which in Requirement (2), the positive electrode active material for a lithium secondary battery has three inflection points of the cumulative pore volume in a range of 10 nm or more and 1500 nm or less.

[3] The positive electrode active material for a lithium secondary battery according to [1] or [2], in which the positive electrode active material for a lithium secondary battery is represented by the following Composition Formula (I).

$$Li[Li_x(Ni_{(1-y-z-w)}Co_yMn_zM_w)_{1-x}]O_2 \qquad (I)$$

(where, M is one or more metal elements selected from the group consisting of Fe, Cu, Ti, Mg, Al, W, B, Mo, Nb, Zn, Sn, Zr, Ga, and V, and $0 \leq x \leq 0.2$, $0 < y \leq 0.4$, $0 < z \leq 0.4$, and $0 \leq w \leq 0.1$ are satisfied)

[4] The positive electrode active material for a lithium secondary battery according to any one of [1] to [3], in which an average particle diameter of the secondary particles is 1 $\mu$m or more and 30 $\mu$m or less.

[5] The positive electrode active material for a lithium secondary battery according to any one of [1] to [4], in which the active material powder includes two or more kinds of the secondary particles of which average secondary particle diameters are different from each other.

[6] The positive electrode active material for a lithium secondary battery according to [5], wherein the active material powder includes secondary particles A of which an average secondary particle diameter is 1 $\mu$m or more and 10 $\mu$m or less and secondary particles B of which an average secondary particle diameter is 5 $\mu$m or more and 30 $\mu$m or less, and a mixing ratio (mass ratio) of the secondary particles A to the secondary particles B is 20:80 to 50:50.

[7] A positive electrode for a lithium secondary battery including the positive electrode active material for a lithium secondary battery according to any one of [1] to [6].

[8] A lithium secondary battery including the positive electrode for a lithium secondary battery according to [7].

Advantageous Effects of Invention

According to the present invention, it is possible to provide a positive electrode active material for a lithium secondary battery having a high volume capacity density, a positive electrode for a lithium secondary battery using the positive electrode active material for a lithium secondary battery, and a lithium secondary battery having the positive electrode for a lithium secondary battery.

BRIEF DESCRIPTION OF DRAWINGS

FIG. 1A is a schematic configuration view illustrating an example of a lithium-ion secondary battery according to an embodiment of the present invention.

FIG. 1B is a schematic configuration view illustrating an example of the lithium-ion secondary battery according to the embodiment of the present invention.

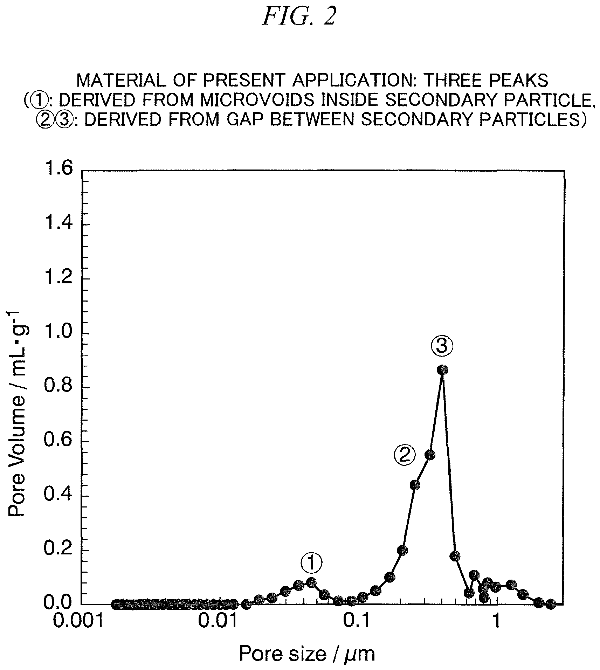

FIG. 2 is a graph showing inflection points of a cumulative pore volume in a range in which a pore radius of the positive electrode active material for a lithium secondary battery in Example 1 is 10 nm or more and 3000 nm or less.

FIG. 3 is a graph showing inflection points of a cumulative pore volume in a range in which a pore radius of the positive electrode active material for a lithium secondary battery in Comparative Example 2 is 10 nm or more and 3000 nm or less.

FIG. 4 is a graph showing inflection points of a cumulative pore volume in a range in which a pore radius of the positive electrode active material for a lithium secondary battery in Comparative Example 1 is 10 nm or more and 3000 nm or less.

FIG. 5 is a graph showing a particle size distribution of the positive electrode active material for a lithium secondary battery in Examples I and 2, and Comparative Examples I and 3.

DESCRIPTION OF EMBODIMENTS

<Positive Electrode Active Material for Lithium Secondary Battery>

A positive electrode active material for a lithium secondary battery according to an embodiment of the present invention includes an active material powder including secondary particles that are aggregates of primary particles into and from which lithium ions can be doped and dedoped. In addition, the positive electrode active material for a lithium secondary battery according to an embodiment of the present invention includes secondary particles having voids therein, and satisfies the following Requirements (1) and (2) in pore distribution measured by a mercury porosimetry method.

(1) A positive electrode active material for a lithium secondary battery has a pore peak in a range in which a pore radius is 10 nm or more and 200 nm or less.

(2) A positive electrode active material for a lithium secondary battery has three or more inflection points of a cumulative pore volume in a range in which the pore radius is 10 nm or more and 3000 nm or less.

Here, "the secondary particles having voids therein" means that secondary particles have cavities (hereinafter, sometimes referred to as "microvoids inside secondary particles") which are located between a plurality of primary particles forming the secondary particles and through which a surface of the secondary particle and the inside of the secondary particle are communicated with each other.

[Requirement (1)]

The positive electrode active material for a lithium secondary battery according to the present embodiment has a pore peak in a range in which a pore radius is 10 nm or more and 200 nm or less. The pore peak in this range means a pore peak resulting from the secondary particles, derived from microvoids inside the secondary particles, and this means that the secondary particles having the microvoids inside secondary particles are included.

Here, the pore peak means a peak including a maximum point in a pore distribution curve measured by a mercury porosimetry method.

[Requirement (2)]

The positive electrode active material for a lithium secondary battery according to the present embodiment has three or more inflection points of a cumulative pore volume in a range in which the pore radius is 10 nm or more and 3000 nm or less.

In the present embodiment, the term "inflection point" means a point at which a sign of a second derivative changes.

In the present embodiment, three inflection points of Requirement (2) are calculated by a following method.

First, by measuring a pore distribution, 71 points of data are measured so that the pore radius is equidistantly between 0.0018 $\mu$m and 246.9 $\mu$m in a case where the pore radius is taken along a horizontal logarithmic axis.

A cumulative pore volume is calculated from each data plot, and a point at which the sign of the second derivative changes is counted as an inflection point.

In the present embodiment, a plurality of pore distribution measurements are preferably performed to confirm that the inflection point appears with high reproducibility. In addition, with regard to a point that is not reproducible, it is determined that the point is derived from a noise peak and thus not counted as an inflection point.

At least three inflection points in Requirement (2) are two or more inflection points derived from microvoids present between the secondary particles (hereinafter, sometimes referred to as a "secondary particle gap") in addition to a first inflection point derived from microvoids of secondary particles having cavities therein, that is, microvoids inside secondary particles. The secondary particle gaps are classified as a gap formed between secondary particles having a large average secondary particle diameter (hereinafter, sometimes referred to as a "secondary particle B"), a gap formed between the secondary particle having a large average secondary particle diameter and a secondary particle having a small average secondary particle diameter (hereinafter, referred to as a "secondary particle A"), and a gap formed between the secondary particles having a small average secondary particle diameter. Two or more inflection points resulting from the secondary particle gap may be the following three cases including: a case of one or more inflection points derived from the gap between the secondary particles having the large average secondary particle diameter, and one or more inflection points derived from the gap between the secondary particles having the small average secondary particle diameter; a case of one or more points derived from the gap formed between the secondary particles having the large average secondary particle diameter and the secondary particles having the small average secondary particle diameter, the inflection point derived from the gap between the secondary particles having large average secondary particle diameter and the inflection point derived from the gap between the secondary particles having the small average secondary particle diameter; and a case of two or more infection points derived from the gap formed between the secondary particle having the large average secondary particle diameter and the secondary particle having the small average secondary particle diameter. In the present embodiment, there may be four or more inflection points.

In the present invention, the average secondary particle diameter refers to a value measured by the following method (laser diffraction scattering method)

Using a laser diffraction particle size distribution analyzer (manufactured by HORIBA, Ltd., model number: LA-950), 0.1 g of secondary particles to be measured is added to 50 ml of a 0.2 mass% by sodium hexametaphosphate aqueous solution, and a dispersion liquid in which the powder is dispersed is obtained. A particle size distribution of the resulting dispersion liquid is measured to obtain a volume-based cumulative particle size distribution curve. In the obtained cumulative particle size distribution curve, a value of the particle diameter (D50) at 50% cumulation measured from the microparticle side is determined as an average particle diameter of the positive electrode active material powder for a lithium secondary battery.

The average secondary particle diameter of the secondary particles (secondary particles A) having a small average secondary particle diameter is smaller than the average secondary particle diameter of the secondary particles having a large average secondary particle diameter (secondary particles B). The average secondary particle diameter of the secondary particles A is generally 1 μm or more and 10 μm or less. The average secondary particle diameter of the secondary particles B is generally 5 μm or more and 30 μm or less.

The positive electrode active material for a lithium secondary battery of the present embodiment, which satisfies Requirement (2), can be obtained by realizing a state in which the secondary particles have cavities therein, that is, the secondary particles have microvoids inside secondary particles, and large secondary particles are present together with small secondary particles. A method of controlling Requirements (1) and (2) within a range of the present invention includes, specifically, a method of broadening the particle size distribution described in detail later. A method of mixing powders having different average secondary particle diameters is preferable. The cumulative particle size distribution curve measured by analyzing a mixture of powders having different average secondary particle diameters with the laser diffraction scattering method may have at least two peaks.

In the present embodiment, it is preferable to have three or more inflection points of the cumulative pore volume in a range in which the pore radius is 10 nm or more and 1500 nm or less.

• Measurement of Pore Distribution by Mercury Porosimetry Method

The pore peak in Requirement (1) and the cumulative pore volume in Requirement (2) can be calculated from the pore distribution obtained by a mercury porosimetry method.

In the present embodiment, a measurement of pore distribution by the mercury porosimetry method is performed by the following method.

First, an inside of a container containing the positive electrode active material is evacuated and then the container is filled with mercury. Mercury has a high surface tension, and as it is, does not penetrate into the pores on the surface of the positive electrode active material. However, in a case where pressure is applied to mercury and gradually increased, mercury gradually penetrates into the pores in an order from pores having large diameter to pores having small diameter. In a case of detecting an amount of mercury penetrating into the pores while pressure is continuously increased, a mercury intrusion curve is obtained from a relationship between the pressure applied to mercury and the amount of mercury penetrating.

Assuming that a shape of the pore is cylindrical, the pressure applied to mercury is P, the pore diameter is D, a surface tension of mercury is σ, and a contact angle between mercury and a sample is θ, the pore diameter is represented by the following Expression (A).

$$D = -4\sigma \times \cos\theta / P \qquad (A)$$

That is, since there is a correlation between the pressure P applied to mercury and the diameter D of the pores into which mercury penetrates, a pore distribution curve representing the relationship between the size of the pore radius and the volume of the positive electrode active material is obtained based on the obtained mercury intrusion curve. Assuming that a length of the pore having the pore diameter D is L, a volume thereof V is represented by the following Expression (B).

$$V = \pi D^2 L / 4 \qquad (B)$$

Since the side area S of the cylinder is, S = πDL, S can be presented as S = 4V / D. Assuming that a volume increase dV in a range of a certain pore diameter is due to a cylindrical pore having a certain average pore diameter, a specific surface area increased in the interval thereof can be determined as dA = 4dV / Dav (Dav is an average pore diameter), and the pore specific surface area ∑A is calculated. The approximate measurement limit of the pore diameter obtained by the mercury porosimetry method is about 2 nm in the lower limit to about 200 μm in the upper limit. The measurement by the mercury porosimetry method can be performed using an apparatus such as a mercury porosimeter. A specific example of a mercury porosimeter includes AutoPore III 9420 (manufactured by Micromeritics Instrument Corp.) and the like. Measurement conditions include conditions such that at a measurement temperature of 25°C, the measurement pressure is in the range of 0.432 psia to 59245.2 psia (2.98 kPaA to 408.391 MPaA), the surface tension of mercury is 480 dynes / cm, and the contact angle between mercury and the sample is 140°.

The positive electrode active material for a lithium secondary battery of the present embodiment includes secondary particles having voids therein. In a case of including the secondary particles having voids therein, the density of the positive electrode active material for a lithium secondary battery tends to decrease, and the volume capacity density tends to decrease. According to the present embodiment, even in a case of including the secondary particles having voids therein, by satisfying Requirement (1) and Requirement (2), a positive electrode active material for a lithium secondary battery having a high volume capacity density can be provided.

The positive electrode active material for a lithium secondary battery of the present embodiment is preferably represented by the following Composition Formula (I).

$$Li[Li_x(Ni_{(1-y-z-w)}Co_yMn_zM_w)_{1-x}]O_2 \qquad (I)$$

(where, M is one or more metal elements selected from the group consisting of Fe, Cu, Ti, Mg, Al, W, B, Mo, Nb, Zn, Sn, Zr, Ga, and V and $0 \leq x \leq 0.2$, $0 < y \leq 0.4$, $0 \leq z \leq 0.4$, and $0 \leq w \leq 0.1$ are satisfied)

From the viewpoint of obtaining a lithium secondary battery having high cycle characteristics, x in Composition Formula (I) is preferably more than 0, more preferably 0.01 or more, and even more preferably 0.02 or more. In addition, from the viewpoint of obtaining a lithium secondary battery having higher initial Coulombic efficiency, x in Composition Formula (I) is preferably 0.1 or less, more preferably 0.08 or less, and even more preferably 0.06 or less.

The upper limit and the lower limit of x can be randomly combined. For example, x is preferably more than 0 and 0.1 or less, more preferably 0.01 or more and 0.08 or less, and even more preferably 0.02 or more and 0.06 or less.

In addition, from the viewpoint of obtaining a lithium secondary battery having low cell resistance, y in Composition Formula (I) is preferably 0.005 or more, more preferably 0.01 or more, and even more preferably 0.05 or more. In addition, from the viewpoint of obtaining a lithium secondary battery having high thermal stability, y in Composition Formula (1) is more preferably 0.35 or less, and even more preferably 0.33 or less.

The upper limit and the lower limit of y can be randomly combined. For example, y is preferably 0.005 or more and 0.35 or less, more preferably 0.01 or more and 0.33 or less, and even more preferably 0.05 or more and 0.33 or less.

In addition, from the viewpoint of obtaining a lithium secondary battery having high cycle characteristics, z in Composition Formula (I) is preferably 0 or more, more preferably 0.03 or more, and even more preferably 0.1 or more. In addition, from the viewpoint of obtaining a lithium secondary battery having high storage characteristics at high temperatures (for example, in an environment at 60°C), z in Composition Formula (I) is preferably 0.4 or less, more preferably 0.38 or less, and even more preferably 0.35 or less.

The upper limit and the lower limit of z can be randomly combined. For example, z is preferably 0 or more and 0.4 or less, more preferably 0.03 or more and 0.38 or less, and even more preferably 0.1 or more and 0.35 or less.

In addition, from the viewpoint of obtaining a lithium secondary battery having low cell resistance, w in Composition Formula (I) is preferably more than 0, more preferably 0.0005 or more, and even more preferably 0.001 or more. In addition, from the viewpoint of obtaining a lithium secondary battery having high discharge capacity at a high current rate, w in Composition Formula (I) is preferably 0.09 or less, more preferably 0.08 or less, and even more preferably 0.07 or less.

The upper limit and the lower limit of w can be randomly combined. For example, w is preferably more than 0 and 0.09 or less, more preferably 0.0005 or more and 0.08 or less, and even more preferably 0.001 or more and 0.07 or less.

M in Composition Formula (I) represents one or more metals selected from the group consisting of Fe, Cu, Ti, Mg, Al, W, B, Mo, Nb, Zn, Sn, Zr, Ga, and V.

Furthermore, M in Composition Formula (1) is preferably one or more metals selected from the group consisting of Ti, Mg, Al, W, B, and Zr from the viewpoint of obtaining a lithium secondary battery having high cycle characteristics, and is preferably one or more metals selected from the group consisting of Al, W, B, and Zr from the viewpoint of obtaining a lithium secondary battery having high thermal stability.

In the present embodiment, from the viewpoint of enhancing the handleability of the positive electrode active material for a lithium secondary battery, the average secondary particle diameter of the positive electrode active material for a lithium secondary battery is preferably 1 μm or more, more preferably 4 μm or more, and even more preferably 5 μm, or more. In addition, from the viewpoint of obtaining a lithium secondary battery having high discharge capacity at a high electric current rate, the average secondary particle diameter of the positive electrode active material for a lithium secondary battery is preferably 30 μm or less, more preferably 20 μm or less, and even more preferably 10 μm or less.

The upper limit and the lower limit of the average secondary particle diameter can be randomly combined. For example, the average secondary particle diameter of the positive electrode active material for a lithium secondary battery is preferably 1 μm or more and 30 μm or less, more preferably 4 μm or more and 20 μm or less, and even more preferably 5 μm or more and 10 μm or less.

In the present invention, the "average secondary particle diameter" of the positive electrode active material powder for a lithium secondary battery refers to a value measured by the laser diffraction scattering method mentioned above.

In the present embodiment, the positive electrode active material for a lithium secondary battery preferably contains an active material powder including two or more kinds of secondary particles having different average secondary particle diameters. Specifically, the active material powder is preferably prepared by mixing the secondary particles A having an average secondary particle diameter of 1 μm or more and 10 μm or less with the secondary particles B having an average secondary particle diameter of 5 μm or more and 30 μm or less. Here, any one of the secondary particles A or the secondary particles B is secondary particles having microvoids inside the secondary particles.

In a case of mixing the secondary particles A with the secondary particles B, a mixing ratio (mass ratio) is preferably 20:80 to 50:50. It can be confirmed whether or not the secondary particles A and the secondary particles B are mixed by measuring the particle size distribution and observing peaks resulting from the secondary particles A and peaks resulting from the secondary particles B.

(Layered Structure)

The crystal structure of the positive electrode active material for a lithium secondary battery is a layered structure, and more preferably a hexagonal crystal structure or a monoclinic crystal structure.

The hexagonal crystal structure belongs to any one space group selected from the group consisting of P3, P31, P32, R3, P-3, R-3, P312, P321, P3112, P3121, P3212, P3221, R32, P3m1, P31m, P3c1, P31c, R3m, R3c, P-31m, P-31c, P-3m1, P-3c1, R-3m, R-3c, P6, P61, P65, P62, P64, P63, P-6, P6/m, P63/m, P622, P6122, P6522, P6222, P6422, P6322, P6mm, P6cc, P63cm, P63mc, P-6m2, P-6c2, P-62m, P-62c, P6/mmm, P6/mcc, P63/mcm, and P63/mmc.

In addition, the monoclinic crystal structure belongs to any one space group selected from the group consisting of P2, P21, C2, Pm, Pc, Cm, Cc, P2/m, P21/m, C2/m, P2/c, P21/c, and C2/c.

Among these, from the viewpoint of obtaining a lithium secondary battery having a high discharge capacity, the crystal structure is particularly preferably a hexagonal crystal structure belonging to the space group R-3m, or a monoclinic crystal structure belonging to C2/m.

[Production Method of Positive Electrode active Material for Lithium Secondary battery]

In producing the positive electrode active material for a lithium secondary battery of the present invention, first, it is preferable that a metal composite compound containing essential metals including metals other than lithium, that is, Ni, Co, and Mn and as desired an optional metal including one or more of Fe, Cu, Ti, Mg, Al, W, B, Mo, Nb, Zn, Sn, Zr, Ga, and V be prepared, the metal composite compound be mixed with an appropriate lithium compound, and then the resulting mixture be calcined. As the metal composite compound, a metal composite hydroxide or a metal composite oxide is preferable. Hereinafter, an example of a production method of a positive electrode active material will be described by separately describing a step of producing the metal composite compound and a step of producing the lithium metal composite oxide.

(Step of Producing Metal Composite Compound)

The metal composite compound can be produced by a generally known batch coprecipitation method or continuous coprecipitation method. Hereinafter, the production method will be described in detail, as an example, taking a metal composite hydroxide containing nickel, cobalt, and manganese as a metal.

By a coprecipitation method, particularly a continuous method described in Japanese Unexamined Patent Application, First Publication No. 2002-201028, a nickel salt solution, a cobalt salt solution, a manganese salt solution, and a complexing agent are reacted, whereby the metal composite hydroxide represented by $Ni_{1-y-z}Co_yMn_z(OH)_2$ (in the formula, $0 < y \leq 0.4$, $0 < z \leq 0.4$) can be produced.

A nickel salt as a solute of the nickel salt solution is not particularly limited, and for example, any of nickel sulfate, nickel nitrate, nickel chloride, and nickel acetate can be used. As a cobalt salt which is a solute of the cobalt salt solution, for example, any of cobalt sulfate, cobalt nitrate, cobalt chloride, and cobalt acetate can be used. As a manganese salt which is a solute of the manganese salt solution, for example, any of manganese sulfate, manganese nitrate, manganese chloride, and manganese acetate can be used. The above metal salts are used at a ratio corresponding to the composition ratio of the $Ni_{1-y-z}Co_yMn_z(OH)_2$. That is, the amount of each of the metal salts is defined so that the molar ratio of nickel, cobalt, and manganese in the mixed solution containing the above metal salts corresponds to (1 - y - z):y:z in Composition Formula (1) of a lithium composite metal compound.

Also, water is used as a solvent.

The complexing agent is capable of forming a complex with ions of nickel, cobalt, and manganese in an aqueous solution, and examples thereof include ammonium ion donors (ammonium hydroxide, ammonium sulfate, ammonium chloride, ammonium carbonate, ammonium fluoride, and the like), hydrazine, ethylenediaminetetraacetic acid, nitrilotriacetic acid, uracildiacetic acid, and glycine. The complexing agent, as desired, may not be contained, and in a case where the complexing agent is contained, the amount of the complexing agent contained in the mixed solution containing the nickel salt solution, the cobalt salt solution, the manganese salt solution, the M salt solution, and the complexing agent is, for example, more than 0 and 2.0 or less in terms of molar ratio to the sum of the number of moles of the metal salts.

During the precipitation, an alkali metal hydroxide (for example, sodium hydroxide, or potassium hydroxide) is added, if necessary, in order to adjust the pH value of the aqueous solution.

When the nickel salt solution, the cobalt salt solution and the manganese salt solution in addition to the complexing agent is continuously supplied to a reaction tank, nickel, cobalt, and manganese react, whereby $Ni_{1-y-z}Co_yMn_z(OH)_2$ is produced. During the reaction, the temperature of the reaction tank is controlled to be, for example, 20°C or more and 80°C or less, and preferably in a range of 30°C or more and 70°C, and the pH value in the reaction tank is controlled to be, for example when measured at 40°C, in a range of pH 9 or more and pH 13 or less, and preferably in a range of pH 11 to pH 13 such that the materials in the reaction tank are appropriately stirred. The reaction tank is of a type which causes the formed reaction precipitate to overflow for separation.

By appropriately controlling the concentrations of the metal salts supplied to the reaction tank, the stirring speed, the reaction temperature, the reaction pH, calcining conditions, which will be described later, and the like, it is possible to control various physical properties such as a secondary particle diameter and a pore radius of the lithium metal composite oxide which is finally obtained in the following steps. In addition to the control of the above conditions, various gases, such as inert gases causing a reduced state including nitrogen, argon, and carbon dioxide and oxidizing gases causing an oxidation state including air and oxygen, or a mixed gas thereof may be supplied in the reaction tank. To promote the oxidation state, in addition to the gases, peroxides such as hydrogen peroxide, peroxide salts such as permanganate, perchlorate, hypochlorite, nitric acid, halogen, ozone, and the like can be used. To promote the reduction state, in addition to the gases, organic acids such as oxalic acid and formic acid, sulfites, hydrazine, and the like can be used.

For example, in a case where a reaction pH in the reaction tank is increased, a metal composite compound having a small secondary particle diameter is easily obtained. On the other hand, in a case where a reaction pH in the reaction tank is decreased, a metal composite compound having a large secondary particle diameter is easily obtained. In addition, in a case where the oxidation state in the reaction tank is increased, a metal composite compound having a large number of cavities is easily obtained. On the other hand, in a case where the oxidation state is decreased, a dense metal composite compound is easily obtained. Since the reaction conditions depend on the size of the reaction tank used and the like, the reaction conditions may be optimized while monitoring various physical properties of the lithium composite oxide which is finally obtained.

After the above reaction, the reaction precipitate obtained is washed with water and then dried to isolate a nickel cobalt manganese metal hydroxide as a nickel cobalt manganese metal composite compound. In addition, as necessary, the reaction precipitate obtained may be washed with a weak acid water or an alkaline solution containing sodium hydroxide or potassium hydroxide, as necessary.

In the above example, the nickel cobalt manganese metal composite hydroxide is produced and a nickel cobalt manganese metal composite oxide may be prepared.

(Step of Producing Lithium Metal Composite Oxide)

The metal composite oxide or hydroxide is dried and thereafter mixed with a lithium compound. The drying condition is not particularly limited, and for example, may be any of a condition under which a metal composite oxide or hydroxide is not oxidized and reduced (that is, a condition under which an oxide remains as an oxide and a hydroxide remains as a hydroxide), a condition under which a metal composite hydroxide is oxidized (that is, a condition under which a hydroxide is oxidized to an oxide), and a condition under which a metal composite oxide is reduced (that is, a condition under which an oxide is reduced to a hydroxide). For a condition under which no oxidation and no reduction occurs, an inert gas such as nitrogen, helium, or argon may be used. In the conditions under which the hydroxide is oxidized, oxygen or air may be used. In addition, as a condition under which a metal composite oxide is reduced, a reducing agent such as hydrazine or sodium sulfite may be used in an inert gas atmosphere. As the lithium compound, any one or two or more of lithium carbonate, lithium nitrate, lithium sulfate, lithium acetate, lithium hydroxide, lithium hydroxide hydrate, lithium oxide, lithium chloride, and lithium fluoride can be mixed and used.

After drying the metal composite oxide or hydroxide, classification may be appropriately performed thereon. The lithium compound and the metal composite oxide or hydroxide mentioned above are used in consideration of the composition ratio of the final object material. For example, in a case of using a nickel cobalt manganese metal composite hydroxide, the lithium compound and the metal composite hydroxide are used in a proportion corresponding to the composition ratio of $Li_xNi_{(1-y-z)}Co_yMn_zO_2$ (in the formula, $0 \leq x \leq 0.2$, $0 < y \leq 0.4$, $0 \leq z \leq 0.4$). By calcining a mixture of the nickel cobalt manganese metal composite hydroxide and the lithium compound, a lithium-nickel cobalt manganese metal composite oxide is obtained. For the calcining, dry air, an oxygen atmosphere, inert atmosphere, and the like are used depending on the desired composition, and a plurality of heating steps are performed as necessary.

A calcining temperature of the metal composite oxide or hydroxide and the lithium compounds such as lithium hydroxide and lithium carbonate is not particularly limited. For example, the calcining temperature is preferably 600°C or more and 1100°C or less, more preferably 750°C or more and 1050°C or less, and even more preferably 800°C or more and 1025°C or less.

A calcining time is preferably 3 hours to 50 hours. In a case where the calcining time is 50 hours or shorter, volatilization of Li can be suppressed and deterioration of the cell performance can be prevented. In a case where the calcining time is 3 hours or longer, a crystal growth tends to be able to proceed favorably. In addition, it is also effective to perform preliminary calcining before the above-mentioned calcining. It is preferable to perform the preliminary calcining at a temperature in a range of 300°C to 850°C for 1 to 10 hours.

It is preferable that the time until the calcining temperature is reached after the start of temperature increase be 0.5 hours or longer and 20 hours or shorter. In a case where the time until the calcining temperature is reached after the start of temperature increase is in this range, a more uniform lithium nickel composite oxide can be obtained. In addition, it is preferable that the time until the temperature holding finishes after the calcining temperature is reached be 0.5 hours or longer and 20 hours or shorter. In a case where the time until the temperature holding finishes after the calcining temperature is reached is in this range, the crystal growth preferably proceeds, and the cell performance can be further improved.

The lithium metal composite oxide obtained by the calcining is suitably classified after pulverization and is regarded as a positive electrode active material applicable to a lithium secondary battery.

• Control Method of Requirement (1) and Requirement (2)

In the present embodiment, among the lithium metal composite oxides obtained by the above method, it is possible to obtain a positive electrode active material for a lithium secondary battery satisfying Requirements (1) and (2), by having microvoids inside the secondary particles and mixing a lithium metal composite oxide having a small average secondary particle diameter with a lithium metal composite oxide having a large average secondary particle diameter.

In the present embodiment, it is preferable to mix two or more kinds of secondary particles having different average secondary particle diameters. Specifically, it is preferable to mix the secondary particles A having an average secondary particle diameter of 1 $\mu$m or more and 10 $\mu$m or less with the secondary particles B having an average secondary particle diameter of 5 $\mu$m or more and 30 $\mu$m or less. Here, at least one of the secondary particles A or the secondary particles B is secondary particles having microvoids inside the secondary particles.

In a case of mixing the secondary particles A with the secondary particles B, a mixing ratio (mass ratio) is preferably 20:80 to 50:50.

• Other Control Method of Requirement (1) and Requirement (2)

In addition, in the present embodiment, Requirement (1) and Requirement (2) may be controlled to be in a desired range of the present invention by using a material having a broad particle size distribution of secondary particles (a material having a broad particle size distribution) among the lithium metal composite oxides obtained by the above method. In order to widen the particle size distribution, for example, in a step of producing the metal composite hydroxide, since a state in which crystals easily grow and a state in which nuclei are easily generated are temporally changed by raising and lowering the reaction pH, the lithium metal composite oxides having a broad particle size distribution can be obtained.

In addition to the above method, in the step of producing the metal composite hydroxides, two reaction tanks having different reaction pHs are provided and then a reaction pH in a first stage reaction tank is lowered and a reaction pH in a second reaction tank is allowed to have a higher reaction pH than the reaction pH in the first stage reaction tank, whereby a lithium metal composite oxide having a wide particle size distribution can be obtained.

In addition, a method for widening the particle size distribution includes, for example, a method of appropriately adjusting the pulverization time, the number of revolutions of the mill for pulverization treatment, and the pulverization treatment type (dry pulverization or wet pulverization), in a pulverization step after calcining.

<Lithium Secondary battery>

Next, a positive electrode using the positive electrode active material for secondary battery of the present invention as a positive electrode active material of a lithium secondary battery, and a lithium secondary battery having the positive electrode will be described while describing the configuration of a lithium secondary battery.

An example of the lithium secondary battery of the present embodiment includes a positive electrode, a negative electrode, a separator interposed between the positive electrode and the negative electrode, and an electrolytic solution disposed between the positive electrode and the negative electrode.

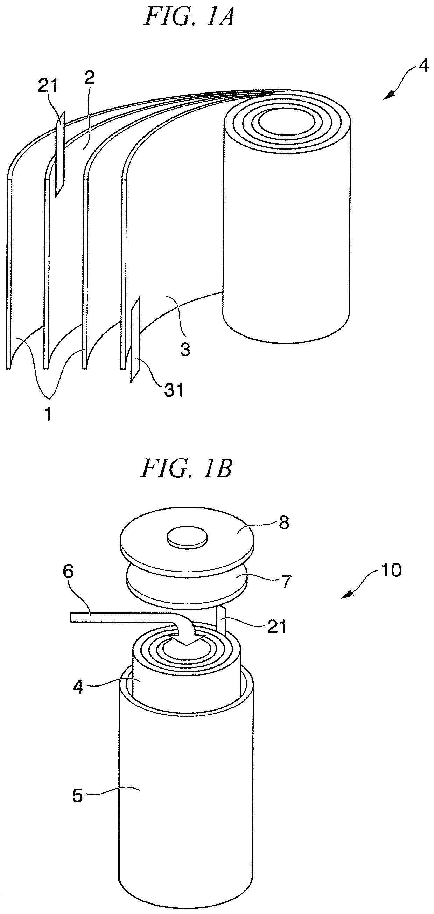

FIGS. 1A and 1B are schematic views illustrating an example of the lithium secondary battery of the present embodiment. A cylindrical lithium secondary battery 10 of the present embodiment is manufactured as follows.

First, as illustrated in FIG. 1A, a pair of separators 1 having a strip shape, a strip-shaped positive electrode 2 having a positive electrode lead 21 at one end, and a strip-like negative electrode 3 having a negative electrode lead 31 at one end are stacked in order of the separator 1, the positive electrode 2, the separator 1, and the negative electrode 3 and are wound to form an electrode group 4.

Next, as shown in FIG. 1B, the electrode group 4 and an insulator (not illustrated) are accommodated in a cell can 5, the can bottom is then sealed, the electrode group 4 is impregnated with an electrolytic solution 6, and an electrolyte is disposed between the positive electrode 2 and the negative electrode 3. Furthermore, the upper portion of the cell can 5 is sealed with a top insulator 7 and a sealing body 8, whereby the lithium secondary battery 10 can be manufactured.

The shape of the electrode group 4 is, for example, a columnar shape such that the cross-sectional shape when the electrode group 4 is cut in a direction perpendicular to the winding axis is a circle, an ellipse, a rectangle, or a rectangle with rounded corners.

In addition, as a shape of the lithium secondary battery having the electrode group 4, a shape defined by IEC60086 which is a standard for a cell defined by the International Electrotechnical Commission (IEC), or by JIS C 8500 can be adopted. For example, shapes such as a cylindrical shape and a square shape can be adopted.

Furthermore, the lithium secondary battery is not limited to the wound type configuration, and may have a stacked type configuration in which a stacked structure of a positive electrode, a separator, a negative electrode, and a separator is repeatedly stacked. The stacked type lithium secondary battery can be exemplified by a so-called coin type cell, a button type cell, and a paper type (or sheet type) cell.

Hereinafter, each configuration will be described in order.

(Positive Electrode)

The positive electrode of the present embodiment can be manufactured by first adjusting a positive electrode mixture containing a positive electrode active material, a conductive material, and a binder, and causing a positive electrode current collector to hold the positive electrode mixture.

(Conductive Material)

A carbon material can be used as the conductive material included in the positive electrode of the present embodiment. As the carbon material, there are graphite powder, carbon black (for example, acetylene black), a fibrous carbon material, and the like. Since carbon black is fine particles and has a large surface area, the addition of a small amount of carbon black to the positive electrode mixture can increase the conductivity inside the positive electrode and improve the charge and discharge efficiency and output characteristics. However, when too much carbon black is added, both the binding force between the positive electrode mixture and the positive electrode current collector and the binding force inside the positive electrode mixture by the binder decrease, which causes an increase in internal resistance.

The proportion of the conductive material in the positive electrode mixture is preferably 5 parts by mass or more and 20 parts by mass or less with respect to 100 parts by mass of the positive electrode active material. In a case of using a fibrous carbon material such as graphitized carbon fiber or carbon nanotube as the conductive material, the proportion can be reduced.

(Binder)

A thermoplastic resin can be used as the binder included in the positive electrode of the present embodiment.

As the thermoplastic resin, fluorine resins such as polyvinylidene fluoride (hereinafter, sometimes referred to as PVdF), polytetrafluoroethylene (hereinafter, sometimes referred to as PTFE), tetrafluoroethylene-hexafluoropropylene-vinylidene fluoride copolymers, hexafluoropropylene-vinylidene fluoride copolymers, and tetrafluoroethylene-perfluorovinyl ether copolymers; and polyolefin resins such as polyethylene and polypropylene can be adopted.

These thermoplastic resins may be used as a mixture of two or more. By using a fluorine resin and a polyolefin resin as the binder and setting the ratio of the fluorine resin to the total positive electrode mixture to 1 mass% or more and 10 mass% or less and the ratio of the polyolefin resin to the total positive electrode mixture to 0.1 mass% or more and 2 mass% or less, a positive electrode mixture having both high adhesion to the positive electrode current collector and high bonding strength in the positive electrode mixture can be obtained.

(Positive Electrode Current Collector)

As the positive electrode current collector included in the positive electrode of the present embodiment, a strip-shaped member formed of a metal material such as Al, Ni, or stainless steel as the forming material can be used. Among these, from the viewpoint of easy processing and low cost, it is preferable to use Al as the forming material and process Al into a thin film.

As a method of causing the positive electrode current collector to hold the positive electrode mixture, a method of press-forming the positive electrode mixture on the positive electrode current collector can be adopted. In addition, the positive electrode mixture may be held on the positive electrode current collector by forming the positive electrode mixture into a paste using an organic solvent, applying the paste of the positive electrode mixture to at least one side of the positive electrode current collector, drying the paste, and pressing the paste to be fixed.

In a case of forming the positive electrode mixture into a paste, as the organic solvent which can be used, amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and N-methyl-2-pyrrolidone (hereinafter, sometimes referred to as NMP) can be adopted.

Examples of a method of applying the paste of the positive electrode mixture to the positive electrode current collector include a slit die coating method, a screen coating method, a curtain coating method, a knife coating method, a gravure coating method, and an electrostatic spraying method.

The positive electrode can be manufactured by the method mentioned above.

(Negative Electrode)

The negative electrode included in the lithium secondary battery of the present embodiment may be a negative electrode into and from which lithium ions are doped and dedoped at a potential lower than that of the positive electrode, and an electrode in which a negative electrode mixture containing a negative electrode active material is held by a negative electrode current collector, and an electrode formed of a negative electrode active material alone can be adopted.

(Negative Electrode Active Material)

As the negative electrode active material included in the negative electrode, materials that can be doped with or dedoped from lithium ions at a potential lower than that of the positive electrode, such as carbon materials, chalcogen compounds (oxides, sulfides, and the like), nitrides, metals, and alloys can be adopted.

As the carbon materials that can be used as the negative electrode active material, graphite such as natural graphite and artificial graphite, cokes, carbon black, pyrolytic carbons, carbon fibers, and an organic polymer compound calcined body can be adopted.

As the oxides that can be used as the negative electrode active material, oxides of silicon expressed by the formula $SiO_x$ (where, x is a positive real number) such as $SiO_2$ and $SiO$; oxides of titanium expressed by the formula $TiO_x$ (where x is a positive real number) such as $TiO_2$ and $TiO$; oxides of vanadium expressed by the formula $VO_x$ (where x is a positive real number) such as $V_2O_5$ and $VO_2$; oxides of iron expressed by the formula $FeO_x$ (where x is a positive real number) such as $Fe_3O_4$, $Fe_2O_3$, and $FeO$; oxides of tin expressed by the formula $SnO_x$ (where x is a positive real number) such as $SnO_2$ and $SnO$; oxides of tungsten expressed by a general formula $WO_x$ (where, x is a positive real number) such as $WO_3$ and $WO_2$; and composite metal oxides containing lithium and titanium or vanadium such as $Li_4Ti_5O_{12}$ and $LiVO_2$ can be adopted.

As the sulfides that can be used as the negative electrode active material, sulfides of titanium expressed by the formula $TiS_x$ (where, x is a positive real number) such as $Ti_2S_3$, $TiS_2$, and $TiS$; sulfides of vanadium expressed by the formula $VS_x$ (where x is a positive real number) such $V_3S_4$, $VS_2$, and $VS$; sulfides of iron expressed by the formula $FeS_x$ (where x is a positive real number) such as $Fe_3S_4$, $FeS_2$, and $FeS$; sulfides of molybdenum expressed by the formula $MoS_x$ (where x is a positive real number) such as $Mo_2S_3$ and $MoS_2$; sulfides of tin expressed by the formula $SnS_x$ (where x is a positive real number) such as $SnS_2$ and $SnS$; sulfides of tungsten expressed by $WS_x$ (where x is a positive real number) such as $WS_2$; sulfides of antimony expressed by the formula $SbS_x$ (where x is a positive real number) such as $Sb_2S_3$; and sulfides of selenium expressed by the formula $SeS_x$ (where x is a positive real number) such as $Se_5S_3$, $SeS_2$, and $SeS$ can be adopted.

As the nitrides that can be used as the negative electrode active material, lithium-containing nitrides such as $Li_3N$ and $Li_{3-x}A_xN$ (where A is either one or both of Ni and Co, and $0 < x < 3$ is satisfied) can be adopted.

These carbon materials, oxides, sulfides, and nitrides may be used singly or in combination of two or more kinds. In addition, these carbon materials, oxides, sulfides, and nitrides may be either crystalline or amorphous.

Moreover, as the metals that can be used as the negative electrode active material, lithium metal, silicon metal, tin metal, and the like can be adopted.

As the alloys that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$ can be adopted.

These metals and alloys are mainly used alone as an electrode after being processed into, for example, a foil shape.

Among the above-mentioned negative electrode active materials, the carbon material mainly including graphite such as natural graphite and artificial graphite is preferably used because the potential of the negative electrode hardly changes from the uncharged state to the fully charged state during charging (the potential flatness is good), the average discharge potential is low, and the capacity retention ratio during repeated charging and discharging is high (the cycle characteristics are good). The shape of the carbon material may be, for example, a flaky shape such as natural graphite, a spherical shape such as mesocarbon microbeads, a fibrous shape such as graphitized carbon fiber, or an aggregate of fine powder.

The negative electrode mixture described above may contain a binder as necessary. As the binder, a thermoplastic resin can be adopted, and specifically, PVdF, thermoplastic polyimide, carboxymethylcellulose, polyethylene, and polypropylene can be adopted.

(Negative Electrode Current Collector)

As the negative electrode current collector included in the negative electrode, a strip-shaped member formed of a metal material, such as Cu, Ni, and stainless steel, as the forming material can be adopted. Among these, it is preferable to use Cu as the forming material and process Cu into a thin film because Cu is less likely to form an alloy with lithium and can be easily processed.

As a method of causing the negative electrode current collector to hold the negative electrode mixture, similarly to the case of the positive electrode, a method using press-forming, or a method of forming the negative electrode mixture into a paste using a solvent or the like, applying the paste onto the negative electrode current collector, drying the paste, and pressing the paste to be compressed can be adopted.

(Separator)

As the separator included in the lithium secondary battery of the present embodiment, for example, a material having a form such as a porous film, non-woven fabric, or woven fabric made of a material such as a polyolefin resin such as polyethylene and polypropylene, a fluorine resin, and a nitrogen-containing aromatic polymer can be used. In addition, two or more of these materials may be used to form the separator, or these materials may be stacked to form the separator.

In the present embodiment, the air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to favorably permeate therethrough during cell use (during charging and discharging).

In addition, the porosity of the separator is preferably 30 vol% or more and 80 vol% or less, and more preferably 40 vol% or more and 70 vol% or less with respect to the volume of the separator. The separator may be a laminate of separators having different porosity.

(Electrolytic Solution)

The electrolytic solution included in the lithium secondary battery of the present embodiment contains an electrolyte and an organic solvent.

As the electrolyte contained in the electrolytic solution, lithium salts such as $LiClO_4$, $LiPF_6$, $LiAsF_6$, LiSbF6, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, Li-BOB (here, BOB refers to bis(oxalato)borate), LiFSI (here, FSI refers to bis(fluorosulfonyl)imide), lower aliphatic carboxylic acid lithium compounds, and $LiAlCl_4$ can be adopted, and a mixture of two or more of these may be used. Among these, as the electrolyte, it is preferable to use at least one selected from the group consisting of LiPF6, $LiAsF_6$, $LiSbF_6$, $LiBF_4$, $LiCF_3SO_3$, $LiN(SO_2CF_3)_2$, and $LiC(SO_2CF_3)_3$, which contain fluorine.

As the organic solvent included in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by introducing a fluoro group into these organic solvents (those in which one or more of the hydrogen atoms of the organic solvent are substituted with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has many features such as a wide operating temperature range, being less likely to deteriorate even when charged and discharged at a high current rate, being less likely to deteriorate even during a long-term use, and being non-degradable even in a case where a graphite material such as natural graphite or artificial graphite is used as the negative electrode active material.

Furthermore, as the electrolytic solution, it is preferable to use an electrolytic solution containing a lithium compound containing fluorine such as $LiPF_6$ and an organic solvent having a fluorine substituent in order to enhance the safety of the obtained lithium secondary battery. A mixed solvent containing ethers having a fluorine substituent, such as pentafluoropropyl methyl ether and 2,2,3,3-tetrafluoropropyl difluoromethyl ether and dimethyl carbonate is even more preferable because the capacity retention ratio is high even when charging or discharging is performed at a high current rate.

A solid electrolyte may be used instead of the electrolytic solution. As the solid electrolyte, for example, an organic polymer electrolyte such as a polyethylene oxide-based polymer compound, or a polymer compound containing at least one or more of a polyorganosiloxane chain or a polyoxyalkylene chain can be used. A so-called gel type in which a non-aqueous electrolyte is held in a polymer compound can also be used. Inorganic solid electrolytes containing sulfides such as $Li_2S$-$SiS_2$, $Li_2S$-$GeS_2$, $Li_2S$-$P_2S_5$, $Li_2S$-$B_2S_3$, $Li_2S$-$SiS_2$-$Li_3PO_4$, $Li_2S$-$SiS_2$-$Li_2SO_4$, and $Li_2S$-$GeS_2$-$P_2S_5$ can be adopted, and a mixture or two or more thereof may be used. By using these solid electrolytes, the safety of the lithium secondary battery may be further enhanced.

In addition, in a case of using a solid electrolyte in the lithium secondary battery of the present embodiment, there may be cases where the solid electrolyte plays a role of the separator, and in such a case, the separator may not be required.

Since the positive electrode active material having the above-described configuration uses the lithium metal composite oxide of the present embodiment described above, the life of the lithium secondary battery using the positive electrode active material can be extended.

Moreover, since the positive electrode having the above-described configuration has the positive electrode active material for a lithium secondary battery of the present embodiment described above, the life of the lithium secondary battery can be extended.

Furthermore, since the lithium secondary battery having the above-described configuration has the positive electrode described above, the lithium secondary battery having a longer life than in the related art can be achieved.

EXAMPLES

Next, the present invention will be described in more detail with reference to Examples.

In the present Examples, the evaluation of the positive electrode active material for a lithium secondary battery and the evaluation of the preparation of the positive electrode for a lithium secondary battery and the lithium secondary battery were performed as follows.

(1) Evaluation of Positive Electrode Active Material for Lithium Secondary battery

• Measurement of Average Secondary Particle Diameter

0.1 g of the positive electrode active material powder for a lithium secondary battery to be measured was poured into 50 ml of 0.2 mass% sodium hexametaphosphate aqueous solution to obtain a dispersion liquid in which the powder was dispersed. The particle size distribution of the obtained dispersion liquid was measured using a laser diffraction scattering particle size distribution measuring apparatus (manufactured by Horiba, Ltd., model number: LA-950) to obtain a volume-based cumulative particle size distribution curve. In the obtained cumulative particle size distribution curve, a value of the particle diameter (D50) at 50% cumulation measured from the microparticle side is determined as an average secondary particle diameter.

On the basis of the number of peak tops in the volume-based cumulative particle size distribution curve, it is possible to determine the number of powders having different average secondary particle diameters, which are contained in the positive electrode active material powder for a lithium secondary battery. In a case where two or more kinds of powders having different average secondary particle diameters are contained in the positive electrode active material powder for a lithium secondary battery, two or more peak tops are observed.

• Measurement of Particle Size Distribution of Positive Electrode Active Material for Lithium Secondary battery

0.1 g of the positive electrode active material powder for a lithium secondary battery to be measured was poured into 50 ml of 0.2 mass% sodium hexametaphosphate aqueous solution to obtain a dispersion liquid in which the powder was dispersed. A particle size distribution of the obtained dispersion liquid was measured using the laser diffraction scattering particle size distribution measuring apparatus (manufactured by Horiba, Ltd., model number: LA-950).

• Compositional Analysis

The compositional analysis of the positive electrode active material powder for a lithium secondary battery produced by the method described below was performed by using an inductively-coupled plasma emission analyzer (SPS 3000, manufactured by SII Nano Technology Inc.) after dissolving the obtained positive electrode active material powder for a lithium secondary battery in hydrochloric acid.

• Pore Distribution Measurement of Positive Electrode Active Material for Lithium Secondary battery by Mercury Porosimetry Method

The positive electrode active material for a lithium secondary battery was isothermally dried at 120°C for 4 hours as a pretreatment. A pore distribution measurement was performed using a mercury porosimeter (manufactured by Micromeritics Instrument Corp., AutoPore III 9420) under the following measurement conditions. The surface tension of mercury was 480 dynes/cm, and the contact angle between mercury and the sample was 140°.

Measurement condition

Measurement temperature: 25°C
Measurement pressure: 0.432 psia to 59245.2 psia
Data measurement points in the pore distribution measurement were 71 points so that the pore radius was equidistantly spaced between 0.0018 $\mu$m and 246.9 $\mu$m in a case where the pore radius was taken along horizontal logarithmic axis. A cumulative pore volume was calculated from each data plot, and a point at which the sign of the second derivative changes was counted as an inflection point. A plurality of pore distribution measurements were performed, thereby confirming that the inflection point was observed with high reproducibility.
With regard to a point that was not reproducible, it was determined that the point was derived from a noise peak and thus was not counted as an inflection point.

(2) Production of Positive Electrode for Lithium Secondary battery

A paste-like positive electrode mixture was prepared by adding the positive electrode active material for a lithium secondary battery obtained by the production method described later, a conductive material (acetylene black), and a binder (PVdF) to achieve a composition of positive electrode active material for a lithium secondary battery:conductive material:binder = 92:5:3 (mass ratio) and performing kneading thereon. During the preparation of the positive electrode mixture, N-methyl-2-pyrrolidone was used as an organic solvent.
The obtained positive electrode mixture was applied to Al foil with a thickness of 40 $\mu$m serving as a current collector, and vacuum drying was performed at 150°C for 8 hours to obtain a positive electrode for a lithium secondary battery. The electrode area of the positive electrode for a lithium secondary battery was 1.65 cm$^2$.

(3) Production of Negative Electrode for Lithium Secondary battery

Next, a paste-like negative electrode mixture was prepared by adding artificial graphite (manufactured by Hitachi Chemical Co., Ltd., MAGD) as a negative electrode active material, CMC (manufactured by Daiichi Kogyo Seiyaku Co., Ltd.) and SBR (manufactured by Nippon A & L Co., Ltd.) as binders, to compose a composition of negative electrode active material:CMC:SRR = 98: 1: 1 (mass ratio) and performing kneading thereon. During the preparation of the negative electrode mixture, ion exchange water was used as a solvent.
The obtained negative electrode mixture was applied to Cu foil with a thickness of 12 $\mu$m serving as a current collector, and vacuum drying was performed at 100°C for 8 hours to obtain a negative electrode for a lithium secondary battery. The electrode area of the negative electrode for a lithium secondary battery was 1.77 cm$^2$.

(4) Production of Lithium Secondary battery (Coin Type Half Cell)

The following operation was performed in a glove box under an argon atmosphere.

The positive electrode for a lithium secondary battery produced in "(2) Production of Positive Electrode for Lithium Secondary battery" was placed on the lower lid of a part for coin type cell R2032 (manufactured by Hohsen Corp.) with the aluminum foil surface facing downward, and a laminated film separator (a heat-resistant porous layer (thickness 16 $\mu$m) was laminated on a polyethylene porous film) was placed thereon. 300 $\mu$l of the electrolytic solution was injected thereinto. As the electrolytic solution, an electrolytic solution obtained by dissolving, in a mixed solution of ethylene carbonate (hereinafter, sometimes referred to as EC), dimethyl carbonate (hereinafter, sometimes referred to as DMC), and ethyl methyl carbonate (hereinafter, sometimes referred to as EMC) in a ratio of 30:35:35 (volume ratio), $LiPF_6$ to achieve 1.0 mol/l (hereinafter, sometimes referred to as $LiPF_6$/EC+DMC+EMC) was used.

Next, metal lithium was used as the negative electrode, and the negative electrode was placed on the upper side of the laminated film separator, covered with the upper lid via a gasket, and caulked by a caulking machine, whereby a lithium secondary battery (coin type half cell R2032, hereinafter, sometimes referred to as "half cell") was manufactured.

(5) Volume Capacity Density Test

A charge and discharge test was conducted under the following conditions using the half cell produced in "(4) Production of Lithium Secondary battery (Coin Type Half Cell)", and the volume capacity density was calculated.

<Charge and Discharge Test>

Test temperature: 25°C
Charging maximum voltage 4.3 V, charging time 6 hours, charging current 1.0 CA, constant current constant voltage charging
Discharging minimum voltage 2.5 V, discharging time 5 hours, discharging current 1.0 CA, constant current discharging

<Calculation of Volume Capacity Density>

From the discharge capacity discharged to 1.0 C and the mass per unit volume of the positive electrode, the volume capacity density was determined based on the following calculation expression.

$$\text{Volume capacity density (mAh/cm}^3) = \text{specific capacity of positive electrode}$$
$$\text{(mAh/g) x density of electrode (g/cm}^3)$$

(Production Example 1)

1. Production of lithium nickel cobalt manganese metal composite oxide 1

After water was put in a reaction tank equipped with a stirrer and an overflow pipe, an aqueous solution of sodium hydroxide was added thereto, and the liquid was maintained at a temperature of 30°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 55:21:24, whereby a mixed raw material solution was prepared.

Next, the mixed raw material solution and an aqueous solution of ammonium sulfate as a complexing agent were continuously added into the reaction tank under stirring, and nitrogen gas was continuously flowed. An aqueous solution of sodium hydroxide was timely added dropwise so that the pH (when measured at 40°C) of the solution in the reaction tank became 13.0 to obtain nickel cobalt manganese composite hydroxide particles, and the particles were washed, thereafter dehydrated by centrifugation, washed, dehydrated, isolated, and dried at 105°C, whereby nickel cobalt manganese metal composite hydroxide 1 was obtained.

The nickel cobalt manganese metal composite hydroxide 1 and lithium carbonate powder were weighed to achieve Li/(Ni + Co + Mn) = 1.06 (molar ratio) and mixed. Thereafter, the mixture was calcined in an air atmosphere at 690°C for 5 hours, and further calcined in an air atmosphere at 875°C for 10 hours to obtain lithium nickel cobalt manganese metal composite oxide 1. As a result of measuring the average secondary particle diameter of the obtained lithium nickel cobalt manganese metal composite oxide 1, the average secondary particle diameter was 4.6 $\mu$m.

(Production Example 2)

1. Production of lithium nickel cobalt manganese metal composite oxide 2

After water was added in a reaction tank equipped with a stirrer and an overflow pipe, an aqueous solution of sodium hydroxide was added thereto, and the liquid was maintained at a temperature of 60°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 55:21:24, whereby a mixed raw material solution was prepared.

Next, the mixed raw material solution and an aqueous solution of ammonium sulfate as a complexing agent were continuously added into the reaction tank under stirring, and nitrogen gas was continuously flowed. An aqueous solution of sodium hydroxide was timely added dropwise so that the pH (when measured at 40°C) of the solution in the reaction tank became 11.9 to obtain nickel cobalt manganese composite hydroxide particles, and the particles were washed, thereafter dehydrated by centrifugation, washed, dehydrated, isolated, and dried at 105°C, whereby a nickel cobalt manganese composite hydroxide 2 was obtained.

The nickel cobalt manganese metal composite hydroxide 2 and lithium carbonate powder were weighed to achieve Li/(Ni + Co + Mn) = 1.06 (molar ratio) and mixed. Thereafter, the mixture was calcined in an air atmosphere at 690°C for 5 hours, and further calcined in an air atmosphere at 875°C for 10 hours to obtain lithium nickel cobalt manganese metal composite oxide 2. As a result of measuring the average secondary particle diameter of the obtained lithium nickel cobalt manganese metal composite oxide 2, the average secondary particle diameter was 11.6 $\mu$m.

(Production Example 3)

1. Production of lithium nickel cobalt manganese composite oxide 3

After water was added in a reaction tank equipped with a stirrer and an overflow pipe, an aqueous solution of sodium hydroxide was added thereto, and the liquid was maintained at a temperature of 50°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 55:21:24, whereby a mixed raw material solution was prepared.

Next, the mixed raw material solution and an aqueous solution of ammonium sulfate as a complexing agent were continuously added into the reaction tank under stirring, and an oxygen-containing gas obtained by mixing air in nitrogen so as to have 3.7% of the oxygen concentration was continuously flowed. An aqueous solution of sodium hydroxide was timely added dropwise so that the pH (when measured at 40°C) of the solution in the reaction tank became 12.5 to obtain nickel cobalt manganese composite hydroxide particles, and the particles were washed, thereafter dehydrated by centrifugation, washed, dehydrated, isolated, and dried at 105°C, whereby a nickel cobalt manganese composite hydroxide 3 was obtained.

The nickel cobalt manganese composite hydroxide 3 and lithium carbonate powder were weighed to achieve Li/(Ni + Co + Mn) = 1.07 (molar ratio) and mixed. Thereafter, the mixture was calcined in an air atmosphere at 760°C for 3 hours, and further calcined in an air atmosphere at 850°C for 10 hours to obtain a lithium nickel cobalt manganese composite oxide 3. As a result of measuring the average secondary particle diameter of the obtained lithium nickel cobalt manganese metal composite oxide 3, the average secondary particle diameter was 3.6 $\mu$m.

(Production Example 4)

1. Production of lithium nickel cobalt manganese composite oxide 4

After water was added in a reaction tank equipped with a stirrer and an overflow pipe, an aqueous solution of sodium hydroxide was added thereto, and the liquid was maintained at a temperature of 50°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 55:21:24, whereby a mixed raw material solution was prepared.

Next, the mixed raw material solution and an aqueous solution of ammonium sulfate as a complexing agent were continuously added into the reaction tank under stirring, and an oxygen-containing gas obtained by mixing air in nitrogen so as to have 8.6% of the oxygen concentration was continuously flowed. An aqueous solution of sodium hydroxide was timely added dropwise so that the pH (when measured at 40°C) of the solution in the reaction tank became 12.0 to obtain nickel cobalt manganese composite hydroxide particles, and the particles were washed, thereafter dehydrated by centrifugation washed, dehydrated, isolated, and dried at 105°C, whereby a nickel cobalt manganese composite hydroxide 4 was obtained.

The nickel cobalt manganese composite hydroxide 1 and lithium carbonate powder were weighed to achieve Li/(Ni + Co + Mn) = 1.07 (molar ratio) and mixed. Thereafter, the mixture was calcined in an air atmosphere at 760°C for 5 hours, and further calcined in an air atmosphere at 850°C for 10 hours to obtain a lithium nickel cobalt manganese composite oxide 4. As a result of measuring the average secondary particle diameter of the obtained lithium nickel cobalt manganese metal composite oxide 4, the average secondary particle diameter was 8.9 $\mu$m.

(Example 1)

1. Production of Positive Electrode Active Material 1 for Lithium Secondary Battery

Secondary particles A and secondary particles B were mixed with a mixing ratio of 25/75 to obtain a positive electrode active material 1 for a lithium secondary battery, by using the lithium nickel cobalt manganese composite oxide 3 prepared in Production Example 3 as the secondary particles A and the lithium nickel cobalt manganese composite oxide 2 prepared in Production Example 2 as the secondary particles B.

2. Evaluation of Positive Electrode Active Material 1 for Lithium Secondary Battery

Compositional analysis of the positive electrode active material 1 for a lithium secondary battery was performed, and when the composition was made to correspond to Composition Formula (1), x = 0.029, y = 0.207, z = 0.239, and w = 0 were obtained. The average secondary particle diameter was 9.6 $\mu$m.

The positive electrode active material 1 for a lithium secondary battery had a pore peak in a range of 10 nm to 100 nm (Requirement (1)) in the pore distribution obtained by a mercury porosimetry method. Moreover, the positive electrode active material 1 for a lithium secondary battery had three inflection points of the cumulative pore volume in a range in which a pore radius is 10 nm or more and 1500 nm or less (Requirement (2)).

In addition, the volume capacity density (mAh/cm$^3$) was 457 mAh/cm$^3$.

(Example 2)

1. Production of Positive Electrode Active Material 2 for Lithium Secondary Battery

Secondary particles A and secondary particles B were mixed with a mixing ratio of 50/50 to obtain a positive electrode active material 2 for a lithium secondary battery, by using the lithium nickel cobalt manganese composite oxide 3 prepared in Production Example 3 as the secondary particles A and the lithium nickel cobalt manganese composite oxide 2 prepared in Production Example 2 as the secondary particles B.

2. Evaluation of Positive Electrode active Material 2 for Lithium Secondary battery

Compositional analysis of the positive electrode active material 1 for a lithium secondary battery was performed, and when the composition was made to correspond to Composition Formula (I), x = 0.031, y = 0.208, z = 0.340, and w = 0 were obtained. The average secondary particle diameter was 7.6 $\mu$m.

The positive electrode active material 2 for a lithium secondary battery had a pore peak in the range of 10 nm to 100 nm (Requirement (1)) in the pore distribution obtained by the mercury porosimetry method. Moreover, the positive electrode active material 2 for a lithium secondary battery had three inflection points of the cumulative pore volume in a range in which a pore radius is 10 nm or more and 1500 nm or less (Requirement (2)).

In addition, the volume capacity density (mAh/cm$^3$) was 455 mAh/cm$^3$.

(Example 3)

1. Production of Positive Electrode Active Material 3 for Lithium Secondary Battery

Secondary particles A and secondary particles B were mixed with a mixing ratio of 25/75 to obtain a positive electrode active material 3 for a lithium secondary battery, by using the lithium nickel cobalt manganese composite oxide 3 prepared in Production Example 3 as the secondary particles A and the lithium nickel cobalt manganese composite oxide 2 prepared in Production Example 4 as the secondary particles B.

2. Evaluation of Positive Electrode active Material 3 for Lithium Secondary battery

Compositional analysis of the positive electrode active material 3 for a lithium secondary battery was performed, and when the composition was made to correspond to Composition Formula (I), x = 0.038, y = 0.208, z = 0.244, and w = 0 were obtained. The average secondary particle diameter was 7.6 $\mu$m.

The positive electrode active material 3 for a lithium secondary battery had a pore peak in the range of 10 nm to 100 nm (Requirement (1)) in the pore distribution obtained by the mercury porosimetry method. Moreover, the positive electrode active material 3 for a lithium secondary battery had three inflection points of the cumulative pore volume in the range in which a pore radius is 10 nm or more and 1500 nm or less (Requirement (2)).

In addition, the volume capacity density (mAh/cm$^3$) was 434 mAh/cm$^3$.

(Example 4)

1. Production of Positive Electrode active Material 4 for Lithium Secondary battery

Secondary particles A and secondary particles B were mixed with a mixing ratio of 50/50 to obtain a positive electrode active material 4 for a lithium secondary battery, by using the lithium nickel cobalt manganese composite oxide 3 prepared in Production Example 3 as the secondary particles A and the lithium nickel cobalt manganese composite oxide 2 prepared in Production Example 4 as the secondary particles B.

2. Evaluation of Positive Electrode active Material 4 for Lithium Secondary battery

Compositional analysis of the positive electrode active material 4 for a lithium secondary battery was performed, and when the composition was made to correspond to Composition Formula (I), x = 0.037, y = 0.209, z = 0.243, and w = 0 were obtained. The average secondary particle diameter was 6.3 $\mu$m.

The positive electrode active material 4 for a lithium secondary battery had a pore peak in the range of 10 nm to 100 nm (Requirement (1)) in the pore distribution obtained by the mercury porosimetry method. Moreover, the positive electrode active material 4 for a lithium secondary battery had three inflection points of the cumulative pore volume in the range in which a pore radius is 10 nm or more and 1500 nm or less (Requirement (2)).

In addition, the volume capacity density (mAh/cm$^3$) was 438 mAh/cm$^3$.

(Comparative Example 1)

1. Production of Positive Electrode active Material 5 for Lithium Secondary battery

The lithium nickel cobalt manganese composite oxide 2 prepared in Production Example 2 was used as a positive electrode active material 5 for a lithium secondary battery.

2. Evaluation of Positive Electrode active Material 5 for Lithium Secondary battery

Compositional analysis of the positive electrode active material 5 for a lithium secondary battery was performed, and when the composition was made to correspond to Composition Formula (I), x = 0.027, y = 0.206, z = 0.237, and w = 0 were obtained. The average secondary particle diameter was 11.6 $\mu$m.

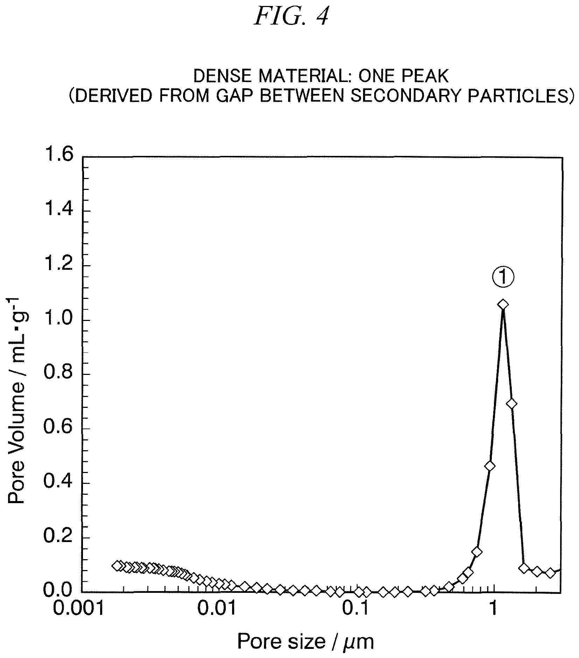

The positive electrode active material 5 for a lithium secondary battery had no pore peak in a range of 10 nm to 200 nm in the pore distribution obtained by mercury porosimetry method, but as shown in FIG. 4, had an inflection point of the cumulative pore volume only in a range in which a pore radius is 300 nm to 2000 nm.

In addition, the volume capacity density (mAh/cm$^3$) was 432 mAh/cm$^3$.

(Comparative Example 2)

1. Production of Positive Electrode active Material 6 for Lithium Secondary battery

The lithium nickel cobalt manganese composite oxide 4 prepared in Production Example 4 was used as a positive electrode active material 6 for a lithium secondary battery.

2. Evaluation of Positive Electrode active Material 6 for Lithium Secondary battery

Compositional analysis of the positive electrode active material 6 for a lithium secondary battery was performed, and when the composition was made to correspond to Composition Formula (1), x = 0.034, y = 0.208, z = 0.245, and w = 0 were obtained. The average secondary particle diameter was 8.9 $\mu$m.

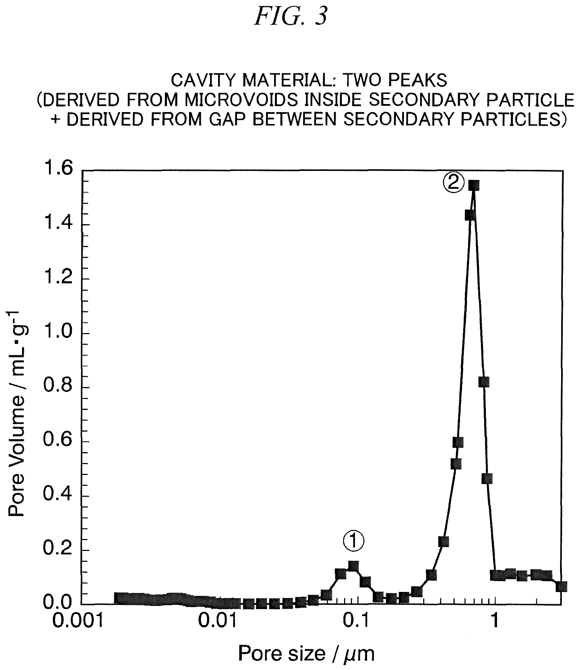

The positive electrode active material 6 for a lithium secondary battery had a pore peak in the range of 10 nm to 100 nm in the pore distribution obtained by mercury porosimetry method, and as shown in FIG. 3, had one inflection point of the cumulative pore volume in the range in which a pore radius is 10 nm or more and 100 nm or less and one inflection point of the cumulative pore volume in the range in which a pore radius is 200 nm or more and 1500 nm or less, respectively.

In addition, the volume capacity density (mAh/cm$^3$) was 417 mAh/cm$^3$.

(Comparative Example 3)

1. Production of Positive Electrode active Material 7 for Lithium Secondary battery

The lithium nickel cobalt manganese composite oxide 3 prepared in Production Example 3 was used as a positive electrode active material 7 for a lithium secondary battery.

2. Evaluation of Positive Electrode active Material 7 for Lithium Secondary battery

Compositional analysis of the positive electrode active material 7 for a lithium secondary battery was performed, and when the composition was made to correspond to Composition Formula (I), x = 0.035, y = 0.210, z = 0.242, and w = 0 were obtained. The average secondary particle diameter was 3.6 $\mu$m.

The positive electrode active material 7 for a lithium secondary battery had a pore peak in the range of 10 nm to 100 nm in the pore distribution obtained by mercury porosimetry method, and had one inflection point of the cumulative pore volume in the range in which a pore radius is 10 nm or more and 100 nm or less and one inflection point of the cumulative pore volume in the range in which a pore radius is 150 nm or more and 1000 nm or less, respectively.

In addition, the volume capacity density (mAh/cm$^3$) was 431 mAh/cm$^3$.

(Comparative Example 4)

1. Production of Positive Electrode active Material 8 for Lithium Secondary battery

Secondary particles A and secondary particles B were mixed with a mixing ratio of 25/75 to obtain a positive electrode active material 8 for a lithium secondary battery, by using the lithium nickel cobalt manganese composite oxide 3 prepared in Production Example 1 as the secondary particles A and the lithium nickel cobalt manganese composite oxide 2 prepared in Production Example 2 as the secondary particles B.

2. Evaluation of Positive Electrode active Material 8 for Lithium Secondary battery

Compositional analysis of the positive electrode active material 8 for a lithium secondary battery was performed, and when the composition was made to correspond to Composition Formula (I), x = 0.028, y = 0.207, z = 0.237, and w = 0 were obtained. The average secondary particle diameter was 9.9 $\mu$m.

The positive electrode active material 8 for a lithium secondary battery had no pore peak in the pore distribution obtained by mercury porosimetry method, but had two inflection points of the cumulative pore volume in the range in which a pore radius is 100 nm or more and 1500 nm or less.

In addition, the volume capacity density (mAh/cm$^3$) was 420 mAh/cm$^3$.

The results of Examples 1 to 4 and Comparative Examples 1 to 4 are described in Table 1.

[Table 1]

| | Requirement (1) | Requirement (2) | Secondary particles A | Secondary particles B | Mixing ratio of particles (mass ratio) | D50 $\mu$m | Volume capacity density (mAh/cm$^3$) |
|---|---|---|---|---|---|---|---|
| Example 1 | Yes | 3 | Production Example 3 | Production Example 2 | 25/75 | 9.6 | 457 |

(continued)

| | Requirement (1) | Requirement (2) | Secondary particles A | Secondary particles B | Mixing ratio of particles (mass ratio) | D50 μm | Volume capacity density (mAh/cm$^3$) |
|---|---|---|---|---|---|---|---|
| Example 2 | Yes | 3 | Production Example 3 | Production Example 2 | 50/50 | 7.6 | 455 |
| Example 3 | Yes | 3 | Production Example 3 | Production Example 4 | 25/75 | 7.6 | 434 |
| Example 4 | Yes | 3 | Production Example 3 | Production Example 4 | 50/50 | 6.3 | 438 |
| Comparative Example 1 | No | 1 | - | - | Not mixed | 11.6 | 432 |
| Comparative Example 2 | Yes | 2 | - | - | Not mixed | 8.9 | 417 |
| Comparative Example 3 | Yes | 2 | - | - | Not mixed | 3.6 | 431 |
| Comparative Example 4 | No | 2 | Production Example 1 | Production Example 2 | 25/75 | 9.9 | 420 |

As shown in the results shown in Table 1 above, Examples 1 to 4 to which the present invention was applied showed a higher volume capacity density than Comparative Examples 1 to 4 to which the present invention was not applied.

• Measurement Result of Particle Size Distribution

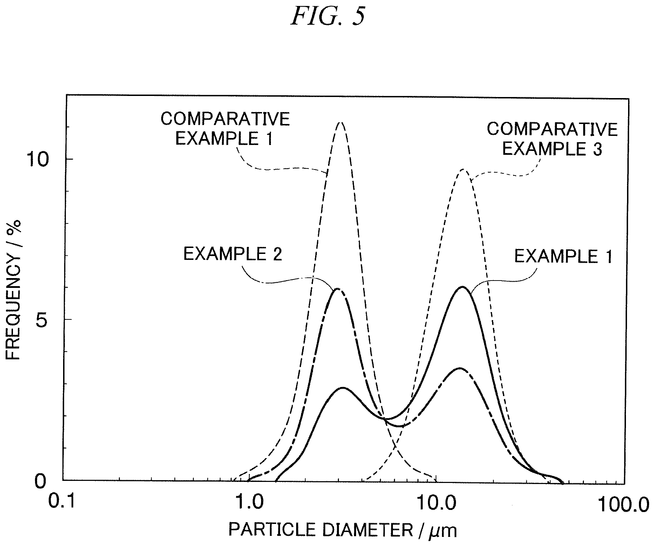

The measurement results of particle size distribution in Examples 1 and 2 and Comparative Examples 1 and 3 are shown in FIG. 5. In Examples 1 and 2, it was possible to confirm peaks resulting from each of the mixed metal oxides. On the other hand, in Comparative Examples 1 and 3, only one peak was confirmed.

Industrial Applicability

According to the present invention, it is possible to provide a positive electrode active material for a lithium secondary battery having a high volume capacity density.

Reference Signs List

1: separator
2: positive electrode
3: negative electrode
4: electrode group
5: cell can
6: electrolytic solution
7: top insulator
8: sealing body
10: lithium secondary battery
21: positive electrode lead
31: negative electrode lead

**Claims**

1. A positive electrode active material for a lithium secondary battery comprising an active material powder including secondary particles that are aggregates of primary particles into and from which lithium ions are doped and dedoped, wherein the positive electrode active material for a lithium secondary battery includes the secondary particles having voids therein and satisfies the following Requirements (1) and (2) in pore distribution of the positive electrode active material for a lithium secondary battery measured by a mercury porosimetry method.

   (1) A positive electrode active material for a lithium secondary battery has a pore peak in a range in which a pore radius is 10 nm or more and 200 nm or less
   (2) A positive electrode active material for a lithium secondary battery has three or more inflection points of a cumulative pore volume in a range in which the pore radius is 10 nm or more and 3000 nm or less

2. The positive electrode active material for a lithium secondary battery according to Claim 1, wherein in Requirement (2), the positive electrode active material for a lithium secondary battery has three inflection points of the cumulative pore volume in a range of 10 nm or more and 1500 nm or less.

3. The positive electrode active material for a lithium secondary battery according to Claim 1 or 2, wherein the positive electrode active material for a lithium secondary battery is represented by the following Composition Formula (I),

$$Li[Li_x(Ni_{(1-y-z-w)}Co_yMn_zM_w)_{1-x}]O_2 \qquad (I)$$

   (where, M is one or more metal elements selected from the group consisting of Fe, Cu, Ti, Mg, Al, W, B, Mo, Nb, Zn, Sn, Zr, Ga, and V, and $0 \leq x \leq 0.2$, $0 < y \leq 0.4$, $0 < z \leq 0.4$, and $0 \leq w \leq 0.1$ are satisfied).

4. The positive electrode active material for a lithium secondary battery according to any one of Claims 1 to 3, wherein an average particle diameter of the secondary particles is 1 $\mu$m or more and 30 $\mu$m or less.

5. The positive electrode active material for a lithium secondary battery according to any one of Claims 1 to 4, wherein the active material powder includes two or more kinds of the secondary particles of which average secondary particle diameters are different from each other.

6. The positive electrode active material for a lithium secondary battery according to Claim 5, wherein the active material powder includes secondary particles A of which an average secondary particle diameter is 1 $\mu$m or more and 10 $\mu$m or less and secondary particles B of which an average secondary particle diameter is 5 $\mu$m or more and 30 $\mu$m or less, and a mixing ratio (mass ratio) of the secondary particles A to the secondary particles B is 20:80 to 50:50.

7. A positive electrode for a lithium secondary battery comprising the positive electrode active material for a lithium secondary battery according to any one of Claims 1 to 6.

FIG. 1A

FIG. 1B

*FIG. 2*

MATERIAL OF PRESENT APPLICATION: THREE PEAKS
(①: DERIVED FROM MICROVOIDS INSIDE SECONDARY PARTICLE,
②③: DERIVED FROM GAP BETWEEN SECONDARY PARTICLES)

# FIG. 3

CAVITY MATERIAL: TWO PEAKS
(DERIVED FROM MICROVOIDS INSIDE SECONDARY PARTICLE
+ DERIVED FROM GAP BETWEEN SECONDARY PARTICLES)

## FIG. 4

### DENSE MATERIAL: ONE PEAK
### (DERIVED FROM GAP BETWEEN SECONDARY PARTICLES)

*FIG. 5*

EP 3 605 672 A1

**INTERNATIONAL SEARCH REPORT**

| International application No. |
| --- |
| PCT/JP2018/012102 |

A. CLASSIFICATION OF SUBJECT MATTER
Int.Cl.  H01M4/525(2010.01)i,    C01G53/00(2006.01)i,    H01M4/36(2006.01)i,
         H01M4/505(2010.01)i

According to International Patent Classification (IPC) or to both national classification and IPC

B. FIELDS SEARCHED

Minimum documentation searched (classification system followed by classification symbols)
Intel. H01M4/525, C01G53/00, H01M4/36, H01M4/505

Documentation searched other than minimum documentation to the extent that such documents are included in the fields searched
Published examined utility model applications of Japan          1922-1996
Published unexamined utility model applications of Japan        1971-2018
Registered utility model specifications of Japan                1996-2018
Published registered utility model applications of Japan        1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | WO 2005/031899 A1 (MITSUBISHI CHEMICAL CORP.) 07 April 2005, claims 1-4, paragraphs [0021]-[0088], examples, comparative examples, fig. 1, 2 & EP 1667260 A1, claims 1-4, paragraphs [0021]-[0088], examples, comparative examples, fig. 1, 2 & JP 2005-123179 A & JP 2005-123180 A & KR 10-2006-0066120 A & US 2006/0134521 A1 & CN 1856890 A | 1-7 |
| X | JP 2017-004635 A (PRIMEEARTH EV ENERGY CO., LTD.) 05 January 2017, claims 1-4, paragraphs [0021]-[0055], examples, comparative examples , fig. 5 (Family: none) | 1-7 |
| X | WO 2015/005180 A1 (TANAKA CHEMICAL CORPORATION) 15 January 2015 & JP 2015-18678 A & CN 105378987 A & KR 10-2016-0030090 A & EP 3021387 A1 & US 2016/0372749 A1 | 1-7 |

☐ Further documents are listed in the continuation of Box C.      ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 April 2018 (19.04.2018) | 01 May 2018 (01.05.2018) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**EP 3 605 672 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017072869 A
- WO 2005020354 A
- JP 2002201028 A